(19) Europäisches Patentamt
European Patent Office
Office européen des brevets

(11) **EP 2 770 946 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **12781039.8**

(22) Anmeldetag: **25.10.2012**

(51) Int Cl.:
***A61C 13/00*** *(2006.01)*

(86) Internationale Anmeldenummer:
**PCT/EP2012/004468**

(87) Internationale Veröffentlichungsnummer:
**WO 2013/060460 (02.05.2013 Gazette 2013/18)**

(54) **ROHLING UND VERFAHREN ZUR HERSTELLUNG EINES ZAHNERSATZTEILS**

BLANK AND METHOD FOR PRODUCING A DENTAL PROSTHESIS PART

ÉBAUCHE ET PROCÉDÉ DE PRODUCTION D'UN ÉLÉMENT DE PROTHÈSE DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2011 DE 102011116853**

(43) Veröffentlichungstag der Anmeldung:
**03.09.2014 Patentblatt 2014/36**

(73) Patentinhaber: **Merz Dental GmbH**
**24321 Lütjenburg (DE)**

(72) Erfinder:
• **SPALT, Jody, Paul**
**24321 Lütjenburg (DE)**
• **BOROWSKI, Christian**
**24321 Lütjenburg (DE)**
• **BECKER, Frank**
**24321 Lütjenburg (DE)**

(74) Vertreter: **Kunz, Herbert et al**
**Fish & Richardson P.C.**
**Highlight Business Towers**
**Mies-van-der-Rohe-Straße 8**
**80807 München (DE)**

(56) Entgegenhaltungen:
WO-A1-2008/083358    DE-A1- 19 654 055
DE-A1-102006 051 294    DE-A1-102009 019 447
US-A- 4 970 032

**Beschreibung**

Die vorliegende Erfindung betrifft einen Zahnersatzformblock zur Herstellung eines Zahnersatzteils und ein Verfahren zur Herstellung des Zahnersatzteils.

Im Rahmen der Planung und Herstellung des Ersatzes fehlender natürlicher Zähne oder Zahnbereiche kommen zunehmend automatisierte CAD/CAM-Verfahren bzw. spanabtragende Verfahren oder Kopierfräsverfahren zum Einsatz, wobei aus einem Zahnersatzformblock das jeweilige Zahnersatzteil, beispielsweise eine Zahnkrone, ein Inlay, ein Onlay oder dergleichen herausgearbeitet wird.

Dies ermöglicht den Herstellern, eine hohe, gleichbleibende Qualität und Passgenauigkeit des Zahnersatzes bei gleichzeitig günstigen Preisen anzubieten. Um jedoch dem Vorbild natürlicher Zähne möglichst nahezukommen und ästhetischen Anforderungen insbesondere hinsichtlich der Farbgebung zu entsprechen, wird oftmals eine Größen- bzw. Farbvariation des aus einem Formblock gefrästen Zahnersatzteils notwendig.

Aus dem Stand der Technik sind unter anderen mehrfarbige Kunststoff-Formkörper mit vorgegebenen variierenden Farbschichten, welche um einen Kern angeordnet sind, zur Verwendung in der Herstellung als Zahnersatz bekannt, beispielsweise beschrieben in US 4,970,032 A.

DE 10 2009 019 447 A offenbart einen Zahnersatzformblock welcher eine Dentinzone aufweist, die vollständig von einem Schmelzbereich umschlossen ist.

US 5,151,044 offenbart einen Formkörper zur Herstellung von Zahnersatzteilen, welche in einer gewünschten Farbe hergestellt werden können, wobei der Formkörper einen Kernbereich sowie drei verschiedene Schichten umfasst, wobei die Schichten eine vorbestimmte Farbe aufweisen, um die Dentin- und Schmelzzonen eines echten Zahnes zu simulieren. Durch unterschiedlich starkes Abtragen der jeweiligen Schichten kann so ein Zahnersatzteil hergestellt werden, welches der Färbung des ursprünglichen Zahnes am nächsten kommt. Die Zahnfarbe wird dabei vorwiegend durch die Dentinfarbe definiert. Der Zahnschmelz moduliert die Farbwahrnehmung durch unterschiedlich starke Transluzenz Transparenz und Dicke.

Auch die WO 2008/083358 beschreibt einen Rohling für die Herstellung von Zahnersatzteilen, welcher in einer äußeren Zone eine andere Farbe aufweist als in einer inneren Zone.

WO 2010/010082 offenbart einen Formkörper aus formstabilisiertem Material, das mindestens einen ersten Bestandteil und einen zweiten Bestandteil aufweist, wobei der zweite Bestandteil eine andere Färbung als der erste Bestandteil aufweist und der zweite Bestandteil in dem ersten Bestandteil, unter Ausbildung einer Grenzfläche so angeordnet ist, dass die Grenzfläche eine räumlich gekrümmte Fläche darstellt. Dabei ist der Formkörper so ausgebildet, dass die Grenzfläche zumindest teilweise dem Verlauf der Dentin/Schmelzgrenze natürlicher oder künstlicher Zähne entspricht. Insbesondere werden die Färbungen des ersten Bestandteils und zweiten Bestandteils so gewählt, dass sie der Schmelz- bzw. Dentinfärbung eines natürlichen Zahns oder Kunstzahns möglichst nahe kommen. Ein Nachteil ist auch hier, dass eine materialsparende Anordnung besonders für die Frontzahnrestauration nicht gegeben ist.

Ein Nachteil der Formkörper und Verfahren des Standes der Technik ergibt sich unter anderem daraus, dass zur Herstellung einer passgenauen Zahnkrone bei gegebenem Stumpf dieser mit genügend Dentinmaterial abgedeckt werden muss, um eine natürliche Farbwirkung zu erzielen. Daher wäre es wünschenswert, den Dentinkern eines Formteils in verschiedenen Größen bereit zu stellen, um einer gegebenen Zahnsituation auch farbästhetisch gerecht zu werden. Gleichzeitig soll aber die Anzahl der erforderlichen Formblöcke je nach Zahnstumpfsituation aus Kosten- und Materialgründen möglichst gering gehalten werden.

Der vorliegenden Erfindung liegt demnach die Aufgabe zugrunde, einen Zahnersatzformblock mit einem inneren dentinartigen Kern bereit zu stellen, welcher eine einfache, kostengünstige Größen- bzw. Farbvariation des herzustellenden Zahnersatzteils gestattet.

Weiterhin liegt der vorliegenden Erfindung die Aufgabe zugrunde, ein Verfahren zur Herstellung eines Zahnersatzteils bereit zu stellen, mit dem die Größe bzw. Farbwirkung des herzustellenden Zahnersatzteils wählbar ist, sowie ein nach diesem Verfahren hergestelltes Zahnersatzteil. Eine derartige Variation des Formblockes würde zu einer deutlichen Reduzierung an erforderlichen Formblöcken und damit zu einer erheblichen Material- bzw. Kosteneinsparung führen.

Diese Aufgabe wird erfindungsgemäß durch die Merkmale des Anspruchs 1 gelöst. Der Zahnersatzformblock zur Herstellung eines Zahnersatzteils weist eine Dentinzone bzw. dentinartige Zone auf, die unter Ausbildung einer Grenzfläche in einen Schmelzbereich eingebettet ist, wobei die Grenzfläche der Dentinzone zumindest eine erste Grenzfläche zur Ausbildung einer ersten Dentinfläche aufweist, welche zur Labialfläche eines ersten potentiellen Zahnersatzteils gerichtet ist, und eine zweite Grenzfläche zur Ausbildung einer zweiten Dentinfläche, welche zur Labialfläche eines zweiten potentiellen Zahnersatzteils gerichtet ist.

Durch eine derartige Ausgestaltung der Dentinzone bzw. ihrer Grenzflächen innerhalb des Formkörpers lässt sich nun die Größe und/oder das farbliche Erscheinungsbild des zu erstellenden Zahnersatzteils durch Auswahl einer zumindest ersten oder zweiten Grenzfläche, welche zur Labialfläche, d. h. lippenseitigen Fläche, eines ersten oder zweiten potentiellen Zahnersatzteils gerichtet ist, vorherbestimmen. Diese eignet sich für Zahnersatzteile des Front- und/oder Eckzahnbereichs.

Erfindungsgemäß bilden dabei die ersten und zweiten Dentinflächen gegenüberliegende Flächen der Dentinzone aus. So lässt sich beispielsweise aus zwei verschiedenen, entgegengesetzten Richtungen des Zahnersatzformblockes wahlweise ein verschieden großes bzw. verschieden farbiges Zahnersatzteil herstellen, wobei die resultierenden Labialflächen vorzugsweise einem Schneide- und/oder Eckzahn zuordenbar sind. Das Profil der ersten und zweiten Dentinfläche weist über die gesamte Fläche eine schwach konvexe Krümmung auf und verjüngt sich zum Zahnhals oder zur Zahnspitze hin. Die gaumenseitige Fläche, d.h. Palatinalfläche, des so erstellbaren Zahnersatzteils ist mehr oder weniger tief ausgehöhlt und schneidet gegebenenfalls zumindest teilweise die Dentinzone, jedoch ist dieser Teil nach außen nicht sichtbar. In approximaler Richtung bilden die erste und zweite Dentinfläche des Formkörpers einen gemeinsamen Schnittbereich, vorzugsweise eine gemeinsame Schnittlinie. Denkbar ist auch eine zweihöckrige Struktur des Dentinkerns, wobei die beiden Höcker eine gleiche oder vorzugsweise unterschiedliche Höhe und/oder Breite aufweisen.

Der Zahnersatzformblock ist bevorzugt aus zahnfarbenähnlichen Dentalwerkstoffen auf Basis von Keramikwerkstoffen und/oder Acrylaten hergestellt, wobei vorzugsweise die Dentinzone und der Schmelzbereich aus dem gleichen Material hergestellt sind. Dabei weisen die Dentinzone und der Schmelzbereich des Zahnersatzformblockes bevorzugt eine unterschiedliche Pigmentierung auf, wobei der Schmelzbereich die Farbwahrnehmung durch unterschiedlich ausgeprägte Transparenz und insbesondere Dicke moduliert. Die Farbwirkung ergibt sich jedoch überwiegend aus der Dentinfarbe. Erfahrungsgemäß weicht die erforderliche künstliche Schmelzschichtdicke oftmals erheblich von der anatomischen Schmelzschichtdicke ab. Der Formkörper der vorliegenden Erfindung gestattet hierbei vorteilhaft eine hohe Flexibilität bei gleichzeitig geringem Materialverbrauch.

Vorzugsweise ist die Dentinzone des Zahnersatzformblockes vollumfänglich von dem Schmelzbereich umschlossen.

Die Schnittfläche der Dentinzone, welche sowohl die erste Dentinfläche als auch die zweite Dentinfläche mittig und senkrecht zur Bodenfläche des Zahnersatzformblockes schneidet, bildet in einer ersten Ausführung eine Form gemäß Formel (I) aus:

$$(I) \qquad F(x) = ax^4 + bx^3 + cx^2 + dx + e \; ;$$

wobei

a im Bereich zwischen 0 und 0,05 liegt;
b im Bereich zwischen 0 und - 0,2 liegt;
c im Bereich zwischen 0 und 0,8 liegt;
d im Bereich zwischen 0 und - 0,15 liegt;
e gleich 0 ist, und
die Außenlinie gegenüber der F(x)-Achse vorzugsweise unsymmetrisch verläuft.

Die Schnittfläche der Dentinzone, welche sowohl die erste Dentinfläche als auch die zweite Dentinfläche mittig und senkrecht zur Bodenfläche des Zahnersatzformblockes schneidet, bildet in einer zweiten Ausführung eine Form gemäß Formel (II) aus:

$$(II) \qquad F(x) = ax^4 + bx^3 + cx^2 + dx + e$$

wobei hier

a im Bereich zwischen 0 und - 0,05 liegt;
b im Bereich zwischen 0 und - 0,2 liegt;
c im Bereich zwischen 0 und 0,4 liegt;
d im Bereich zwischen 0 und 0,15 liegt; e im Bereich zwischen 0 und 12 mm, bevorzugt zwischen 0 und 11,34 mm liegt, und die Außenlinie gegenüber der F(x)-Achse vorzugsweise unsymmetrisch verläuft.

Die Schnittfläche der Dentinzone, welche sowohl die erste Dentinfläche als auch die zweite Dentinfläche mittig und senkrecht zur Bodenfläche des Zahnersatzformblockes schneidet, bildet in einer besonders bevorzugten dritten Ausführungsform die Form gemäß Formel (III) aus:

$$(III) \quad F(x) = ax^5 + bx^4 + cx^3 + dx^2 + ex + f \; ;$$

wobei hier

a im Bereich kleiner gleich 0 und -0,05 liegt;
b im Bereich kleiner gleich 0 und - 0,2 liegt;
c im Bereich zwischen 0 und 0,2 liegt;
d im Bereich zwischen 0 und - 0,8 liegt;
e im Bereich zwischen 0 und 0,5 liegt;
f im Bereich zwischen 0 und 10, bevorzugt zwischen 8 und 9,8 liegt, und vorzugsweise die Außenlinie gegenüber der F(x)-Achse unsymmetrisch verläuft.

Weiterhin bildet die Schnittfläche der Dentinzone, welche sowohl die erste Dentinfläche als auch die zweite Dentinfläche mittig und parallel zur Bodenfläche des Zahnersatzformblockes schneidet, bevorzugt eine Form gemäß Formel (IV) aus:

$$(IV) \quad G(x) = fx^4 + gx^2 + h \; ;$$

wobei

f im Bereich zwischen -0,001 bis 1 liegt;
g im Bereich zwischen - 0,2 bis 0,2 liegt;
h im Bereich zwischen -0,06 und 6 liegt; und
die Außenlinie gegenüber der G(x)-Achse vorzugsweise symmetrisch verläuft.

Besonders bevorzugt bildet die Schnittfläche der Dentinzone, welche sowohl die erste Dentinfläche als auch die zweite Dentinfläche mittig und parallel zur Bodenfläche des Zahnersatzformblockes schneidet, die Form gemäß Formel (V) aus:

$$(V) \quad G(x) = fx^4 + gx^3 + hx^2 + ix + j;$$

wobei

f im Bereich zwischen -0,001 bis 0,05 liegt;
g im Bereich zwischen - 0,002 bis 0,005 liegt;
h im Bereich zwischen -0,2 bis 0,2 liegt;
i im Bereich zwischen -0,06 bis 0,06 liegt;
j im Bereich zwischen -4,5 und 5,5 liegt; und vorzugsweise die Außenlinie gegenüber der G(x)-Achse symmetrisch verläuft.

Die Dentinzone des Zahnersatzformblockes ist bevorzugt auf einer Dentinbasisfläche aufgesetzt, wobei die Dentinbasisfläche die gesamte Basisfläche des Zahnersatzformblockes bildet.
Erfindungsgemäß, durch die Ausbildung der ersten und zweiten Dentinfläche in jeweils konvexer Form, jedoch in unterschiedlicher Größe bzw. mit verschiedenem, nicht spiegelsymmetrischem Konturverlauf werden vorteilhaft innerhalb eines Formblockes eine Vielzahl an prothetischen Situationsmöglichkeiten bereitgestellt, die eine deutliche Materialersparnis für die Zahnersatzteilherstellung bedeuten. Insbesondere weisen die jeweils erste und zweite Dentinfläche einen voneinander verschiedenen Flächeninhalt und/oder eine voneinander verschiedene Flächenform auf, die das wahlweise Ausarbeiten gewünschter Zahnersatzteile ermöglichen. Der untere Bereich der Dentinzone, welcher auf einer Dentinbasisfläche des Zahnersatzformblockes sitzt, geht herstellungsbedingt vorzugsweise ohne Änderung ihrer konvexen Form bzw. Krümmung in diese über. Es ist somit im unteren Bereich der jeweiligen Parabelkontur der beiden Dentinflächen kein Wendepunkt vorgesehen. Darüberhinaus läßt sich ein herzustellender künstlicher Zahn, bevorzugt ein Front- oder Eckzahn, je nach gewünschter Größe bzw. Färbung, jeweils einem Bereich der ersten oder der zweiten Dentinfläche im Formblock zuordnen bzw. virtuell in diesen hineingelegt werden.
Erfindungsgemäß umfasst ein Verfahren zur Herstellung eines Zahnersatzteils folgende Schritte:

a) Bereitstellen eines Zahnersatzformblockes gemäß der Erfindung;

b) Auswählen zumindest einer Dentinfläche;

c) Herstellen eines im Front- und/oder Eckzahnbereich anordenbaren Zahnersatzteils in wahlweise mindestens zwei verschiedenen Größen und/oder Farben nach einem CAD/CAM-Verfahren mittels Materialabtragung aus dem Zahnersatzformblock.

Vorzugsweise wird dabei das Material derart abgetragen, dass die Farbe des resultierenden Zahnersatzteils durch die wählbare Dentinfläche und/oder die Schichtdicke des Schmelzbereiches bestimmbar ist.

Die Farbe des resultierenden Zahnersatzteils ist vorzugsweise anhand der Schichtdicke des verbleibenden Schmelzbereiches mittels CAD-Software vorherbestimmbar.

Das Zahnersatzteil, welches in wählbarer Größe und/oder Farbe aus einem Zahnersatzformblock nach oben beschriebenem Verfahren hergestellt ist, weist die Form eines Frontzahns oder Eckzahns auf.

Weitere Einzelheiten und Merkmale des erfindungsgemäßen Zahnersatzformblockes ergeben sich aus der nachfolgenden Beschreibung von Ausführungsbeispielen anhand der Zeichnung. In der Zeichnung zeigt:

Fig. 1    eine approximale Ansicht eines erfindungsgemäßen Zahnersatzformblockes;

Fig. 2    eine vestibuläre Ansicht eines erfindungsgemäßen Zahnersatzformblockes;

Fig. 3    eine Schrägansicht eines Zahnersatzformblockes;

Fig. 4    eine inzisale Draufsicht auf einen Zahnersatzformblock;

Fig. 5    a-f die graphische Darstellung der Funktion jeweils dreier Schnitte 1,2,3 in vertikaler bzw. mesiodistaler (a, b, c) sowie horizontaler 4,5,6 (d-1,2; e-1,2; f-1,2) Richtung des Dentinkerns;

Fig. 6    a-f die graphische Darstellung der Funktion jeweils dreier Schnitte I,II,II in vertikaler bzw. mesiodistaler (a, b, c) sowie Schnitte IV, V, VI in horizontaler (d-1,2; e-1,2; f-1,2) Richtung des Dentinkerns; und

Fig. 7    a-f die graphische Darstellung der Funktion jeweils dreier weiterer Schnitte I,II,III in vertikaler bzw. mesiodistaler (a, b, c) sowie Schnitte IV, V, VI in horizontaler (d-1,2; e-1,2; f-1,2) Richtung des Dentinkerns.

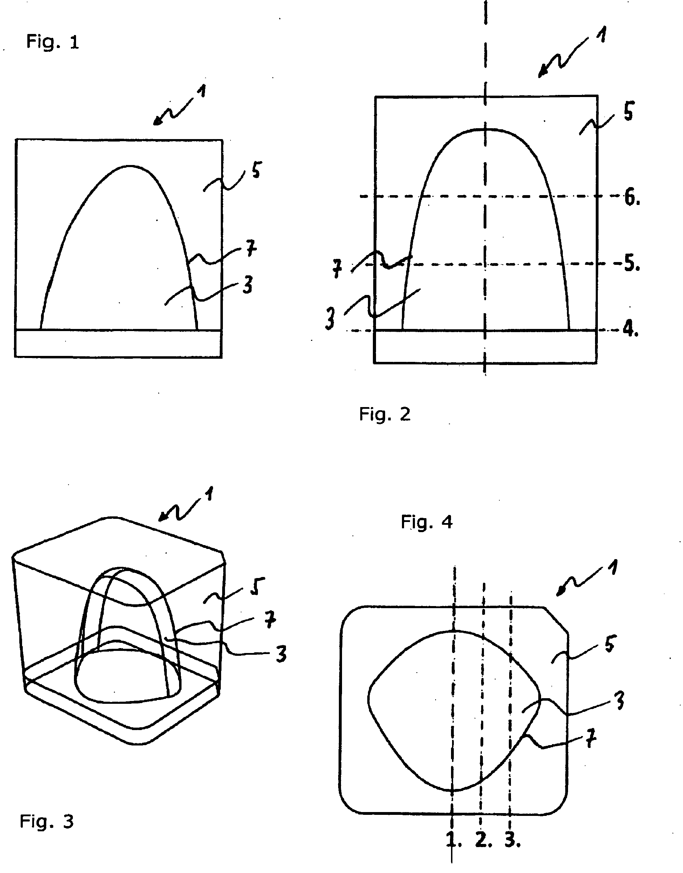

Der in Fig. 1 und 2 dargestellte Formblock 1 dient der Herstellung von Zahnersatzteilen, wie beispielsweise einer Zahnkrone, vorzugsweise im Bereich der Front- und/oder Eckzähne. Der Formblock 1 besitzt eine Dentinzone 3, die unter Ausbildung einer Grenzfläche 7 in einen Schmelzbereich 5 eingebettet ist. Die Grenzfläche 7 der Dentinzone 3 weist eine erste Dentinfläche auf, welche zur Labialfläche eines ersten potentiellen Zahnersatzteils gerichtet ist. Eine der ersten Grenzfläche gegenüberliegende zweite Grenzfläche zur Ausbildung einer zweiten Dentinfläche, welche zur Labialfläche eines zweiten potentiellen Zahnersatzteils gerichtet ist, liegt entgegengesetzt gegenüber der ersten Grenzfläche. Die erste und zweite Dentinfläche weisen jeweils eine konvexe Form auf, wobei die Größe und/oder Form der beiden Dentinflächen voneinander vorzugsweise verschieden ist. Durch eine derartige Variation der Dentinzone 3 in zwei entgegengesetzten Richtungen des Formblockes 1 wird vorteilhaft ermöglicht, mit einer reduzierten Anzahl an Zahnersatzformblöcken die gleiche Anzahl an prothetischen Situationen oder Alternativen abzudecken. Die Breite des Bodenabschnitts der in Fig. 1 dargestellten Dentinschnittfläche beträgt in einer ersten Ausführungsform beispielsweise ungefähr 9,53 mm, in einer zweiten Ausführungsform 10,24 mm. Die Breite des Bodenabschnitts der in Fig. 2 dargestellten Dentinschnittfläche beträgt beispielsweise ungefähr 10,91 mm bzw. in zweiter Ausführung 11,68 mm, die Breite des Bodenabschnitts des gesamten Formblocks 1 in beiden Ausführungsformen ungefähr 13,40 mm; die Höhe der Dentinschnittfläche beträgt dabei ungefähr 13,46 mm und die Höhe des gesamten Zahnersatzformblockes 1 ungefähr 15,30 mm. Hierbei handelt es sich lediglich um Richtwerte mit Bezug auf standardisierte Dentalformblöcke, die je nach Situation gegebenenfalls verschiedene Werte annehmen können.

Anhand der Querschnittdarstellung der Fig. 2 ist die labiale Dentin- bzw. Zahnfläche zu erkennen, d.h. jene Fläche, welche zur Lippe hin gelegen ist. Der Frontzahnbereich ist labial identisch mit der vestibulären Richtung. In dieser Darstellung nicht zu erkennen ist eine zweite Dentinfläche, welche zur Labialfläche eines zweiten Zahnersatzteils gerichtet ist, wobei diese zweite Grenzfläche zur Ausbildung der zweiten Dentinfläche vorzugsweise eine von der ersten Grenzfläche verschiedene Größe und/oder Form aufweist. Dabei entsprechen die erste und zweite Dentinfläche gegenüberliegenden Flächen der Dentinzone 3 des Zahnersatzformblockes 1. Aus dem einen Formkörper 1 kann somit wahlweise ein Ersatzteil gefertigt werden, welches der Form bzw. Farbe des zu erstellenden Ersatzteiles am nächsten kommt. Entsprechend der realen Zahnsituation kann also unmittelbar vor dem Herstellungsbeginn entschieden werden, welche Labialform des Formblockes 1 ausgewählt werden muss, um daraus ein entsprechendes Zahnersatzteil abzutragen bzw. zu fräsen oder schleifen. Die erste und zweite Dentinfläche stellen demnach gegenüberliegende, konvex gekrümmte Grenzflächen 7 dar, welche in approximaler Richtung, d.h. zum Nachbarzahn hin, einen gemeinsamen Schnittbereich, bevorzugt eine gemeinsame Schnittlinie, aufweisen. Die Morphologie der Dentinzone 3 kann aber auch einem Doppelkern ähneln, dessen beiden Teilbereiche eine jeweils voneinander verschiedene höckerartige Form und/oder Höhe aufweisen. Der Zahnersatzformblock 1 kann demzufolge materialsparend dazu eingesetzt werden, einen Eckzahn oder einen Frontzahn in wahlweise verschiedener Größe bzw. Farbe abzutragen bzw. zu fräsen oder schleifen.

Die in Fig. 4 dargestellte Draufsicht auf den Formkörper 1 zeigt die Grundfläche der Dentinzone 3 innerhalb des Schmelzbereiches 5. Wird der Formkörper 1 soweit abgefräst, dass Teile des äußeren Schmelzbereiches 5 entfernt werden und Teile des Dentinbereiches 3 freiliegen, ist dieser Bereich in einer palatinalen bzw. oralen Richtung zu orientieren, die nach dem Einbau des Ersatzteils beim Patienten nach außen hin nicht sichtbar sind. Dem Grundriss ist insbesondere zu entnehmen, dass die Struktur des Dentinkerns 3 zumindest bezüglich der Bodenfläche zwei verschieden stark gekrümmte Oberflächen aufweist. Die unterschiedliche konvexe Krümmung der beiden gegenüberliegenden Dentinflächen ermöglicht damit die wahlweise Herstellung zweier verschieden geformter bzw. gefärbter Front- bzw. Eckzähne, wobei sich insbesondere der verschiedenartige Farbeindruck des ersten bzw. zweiten Zahnersatzteils aus einer Kombination der wählbaren Dentinfläche und der maschinell vorbestimmbaren Schichtdicke des die Dentinzone 3 umgebenden Schmelzbereiches 5 ergibt.

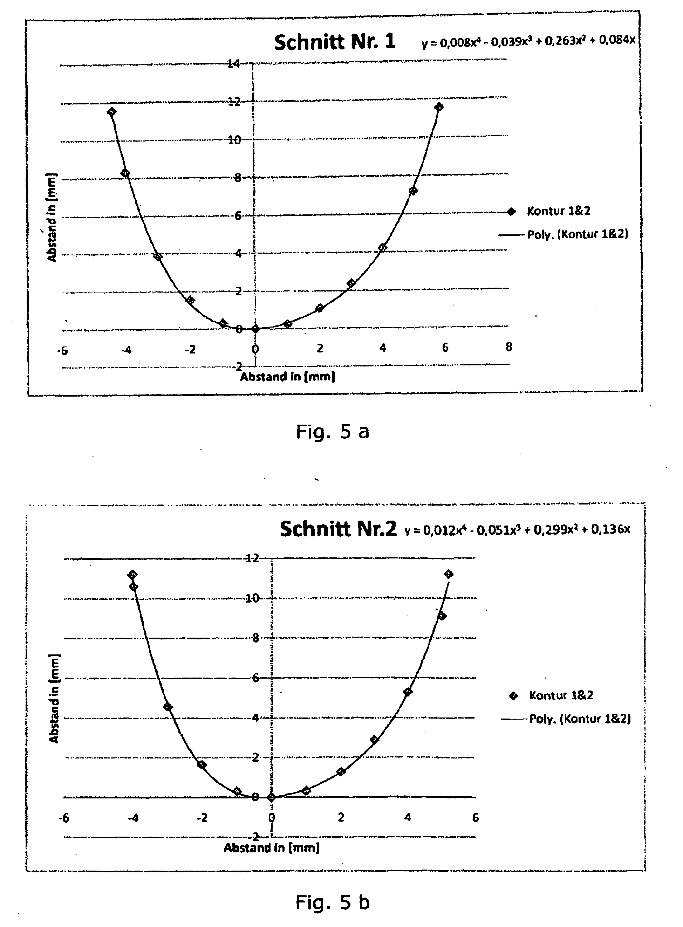

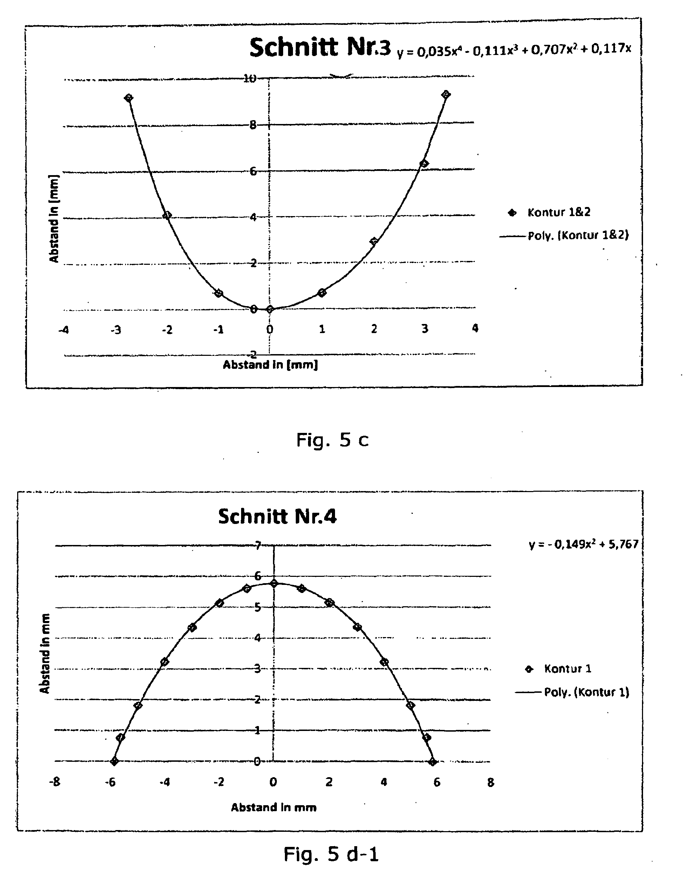

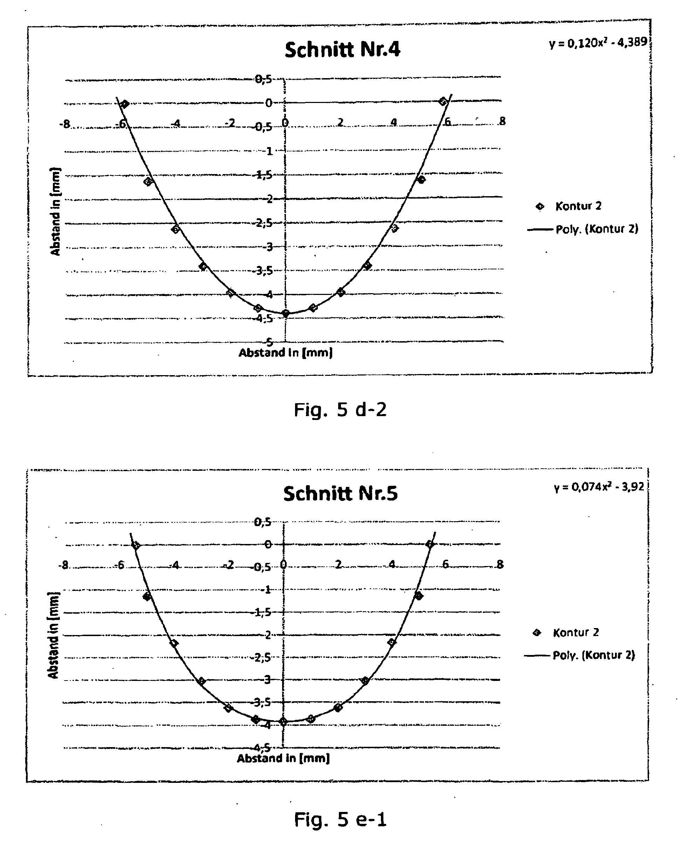

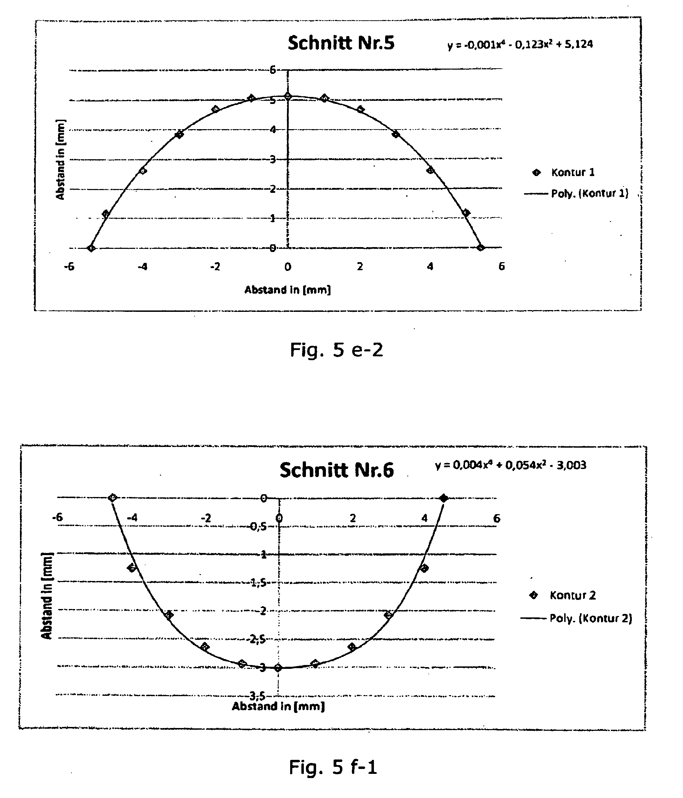

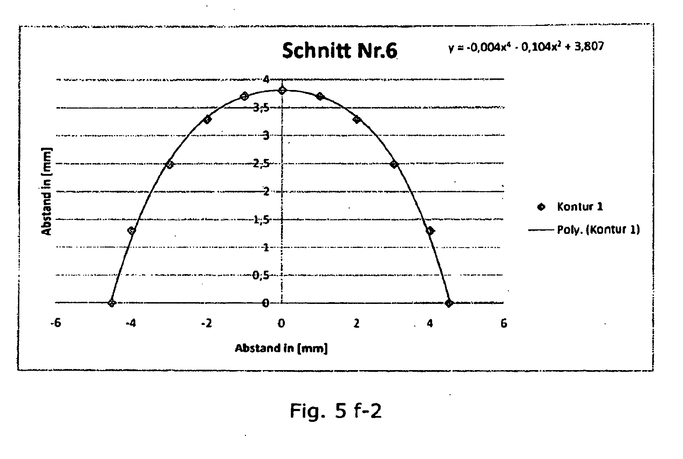

Die in Fig. 5 abgebildeten graphischen Darstellungen resultieren aus hypothetischen Schnitten durch die in Fig. 2 und Fig. 4 gezeigten Darstellungen der Dentinzone 3 des Formblockes 1. Diese Schnitte sind mit den Ziffern 1, 2, 3 in Fig. 4 und den Ziffern 4, 5, 6 in Fig. 2 bezeichnet. Die Schnitte 1, 2 , d.h. im Abstand von z.B. 2 mm von Schnitt 1, 3 , d.h. im Abstand von z.B. 4 mm von Schnitt 1, beschreiben jeweils eine Schnittfläche, welche sowohl die erste als auch die zweite Dentinfläche mittig und senkrecht zur Bodenfläche des Formblockes 1 schneidet. Die Form der Schnittfläche, welche mittig und senkrecht zur Bodenfläche beide Dentinzonen schneidet, entspricht Schnittformel (I) mit e = 0. Die Form der jeweils zwei gegenüberliegenden Schnittflächen der Schnitte 4, d.h. im Abstand von z.B. 1,90 mm von der Grundfläche, 5, d.h. im Abstand von z.B. 6,29 mm von der Grundfläche, 6, d.h. im Abstand von z.B. 1,90 mm von der Grundfläche, welche beide Dentinzonen mittig und parallel zur Bodenfläche schneidet, entspricht Formel (II).

Fig. 5a-c zeigt somit die graphische Darstellung der Funktion (I) mit e = 0 jeweils dreier Schnitte 1, 2, 3 in vertikaler bzw. mesiodistaler und Fig. 5 d-f drei Schnitte 4, 5, 6 in horizontaler Richtung des Dentinkerns 3 in jeweils zwei gegenüberliegenden Konturen, dargestellt in Fig. 5d-1 und - 2, Fig. 5e-1 und - 2, Fig. 5f-1 und - 2 . Die graphischen Darstellungen der Fig. 5a-c bzw. d-f enthalten zusätzlich die den gezeigten Trendlinien zugrunde liegenden Funktionen, wobei den mesiodistalen Schnitten 1, 2, 3 jeweils eine Funktion zugrunde liegt. Die horizontalen Schnitte 4, 5, 6 in Fig. 5d-1,2; e-1,2 und f-1,2 beschreiben jeweils gegenüberliegende Konturen, welche durch die jeweils angegebene Funktion beschrieben und mit Kontur 1 bzw. Kontur 2 bezeichnet sind.

Dabei liegt Fig. 5a die Funktion $y = 0{,}008\, x^4 - 0{,}039x^3 + 0{,}263x^2 + 0{,}084x + 0$ zugrunde,

Fig. 5b liegt die Funktion $y = 0{,}012\, x^4 - 0{,}051\, x^3 + 0{,}299\, x^2 + 0{,}136\, x + 0$ zugrunde,

Fig. 5c liegt die Funktion $y = 0{,}035\, x^4 - 0{,}111\, x^3 + 0{,}707\, x^2 + 0{,}117\, x + 0$ zugrunde,

Fig. 5d-1 liegt die Funktion $y = -0{,}149\, x^2 + 5{,}767 + 0$ zugrunde,

Fig. 5d-2 liegt die Funktion $y = 0{,}120\, x^2 - 4{,}389$ zugrunde,

Fig. 5e-1 liegt die Funktion $y = 0{,}074\, x^2 - 3{,}92$ zugrunde,

Fig. 5e-2 liegt die Funktion $y = -0{,}001\, x^4 - 0{,}123\, x^2 + 5{,}124$ zugrunde,

Fig. 5f-1 liegt die Funktion $y = 0{,}004\, x^4 + 0{,}054\, x^2 - 3{,}003$ zugrunde,

und Fig. 5f-2 liegt die Funktion $y = -0{,}004\, x^4 - 0{,}104\, x^2 + 3{,}807$ zugrunde.

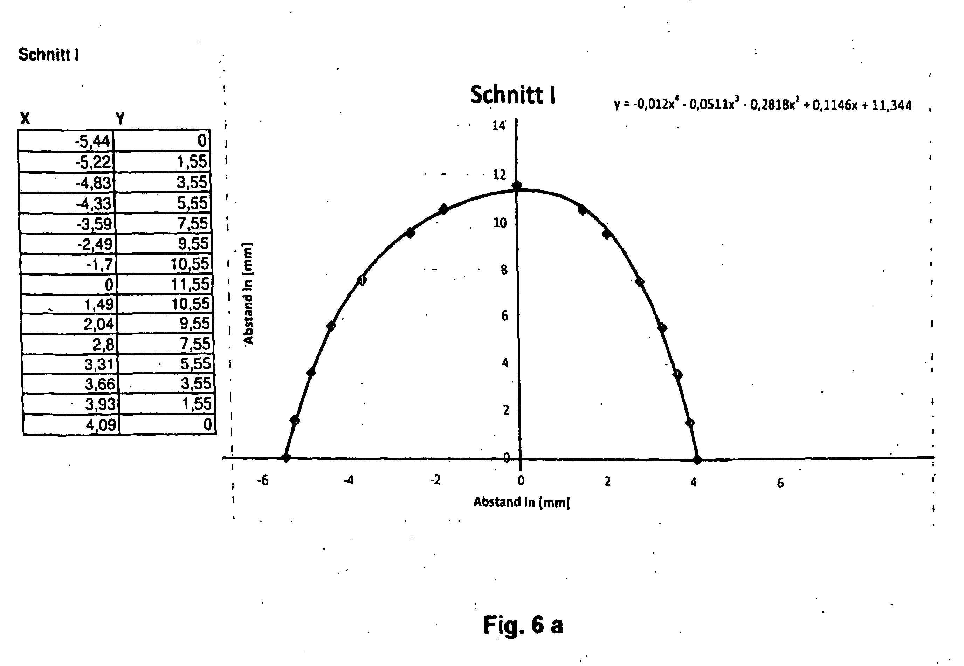

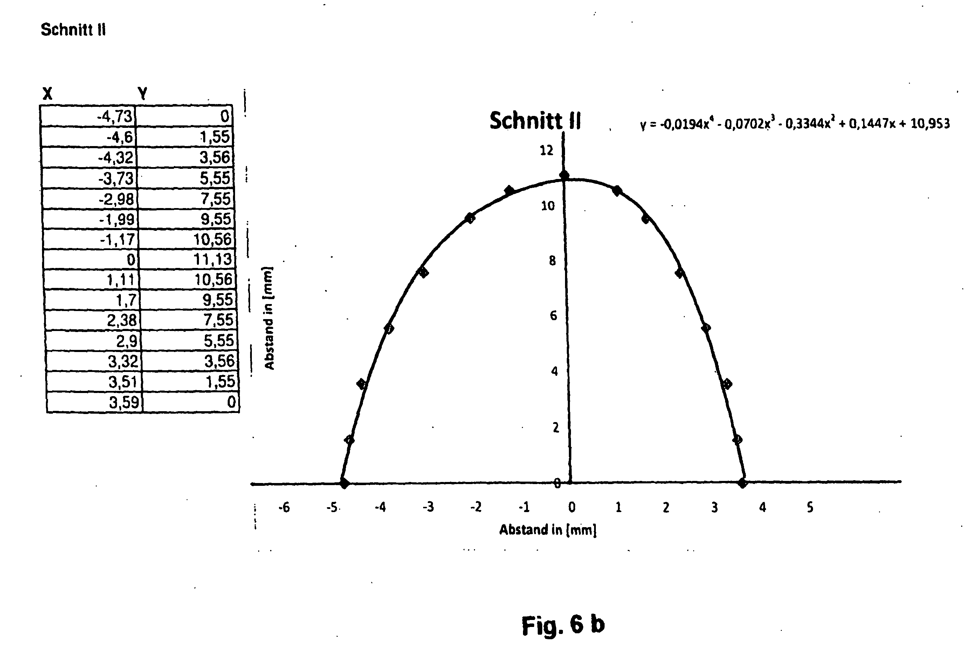

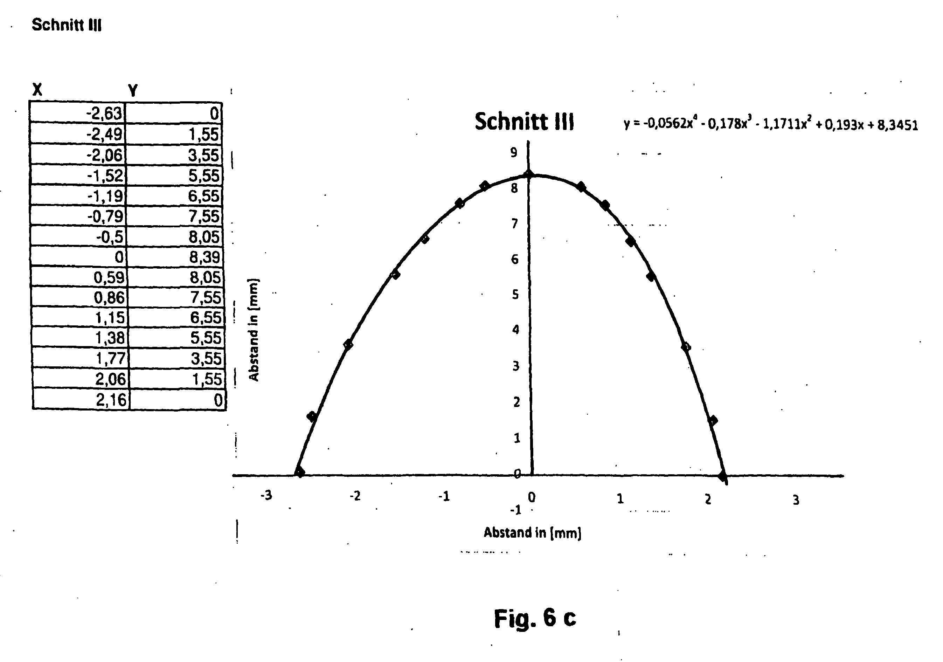

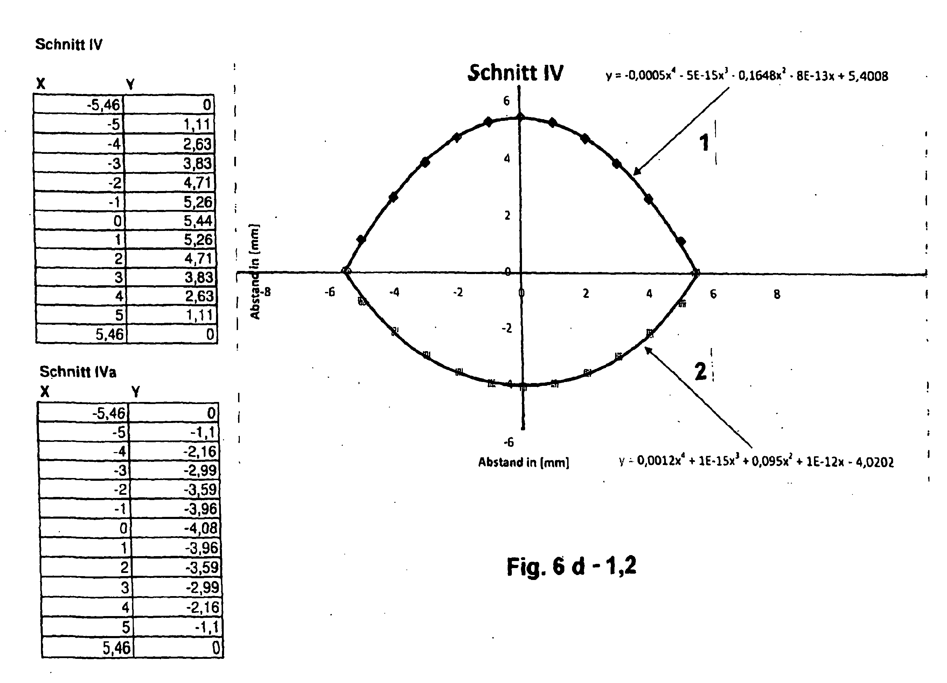

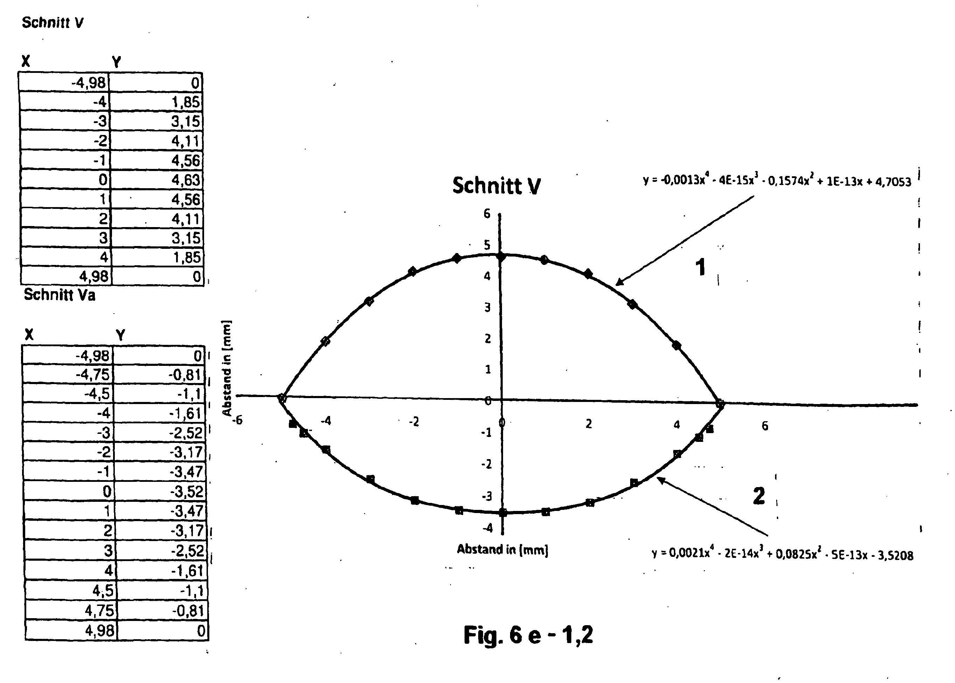

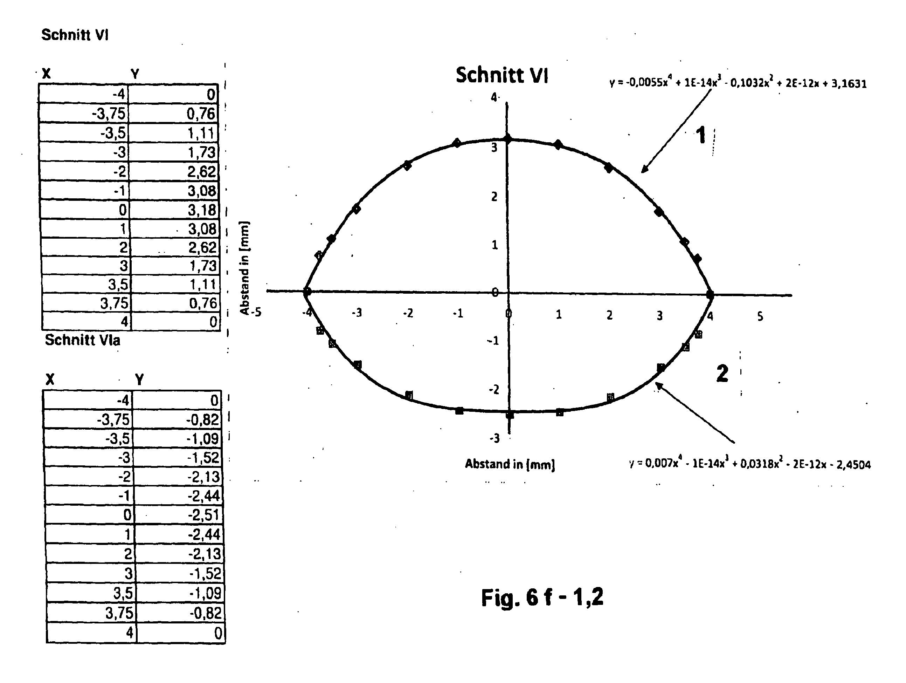

Fig. 6a-f zeigt die graphische Darstellung der Funktion (II) mit e im Bereich von 0 bis 12, bevorzugt zwischen 0 und 11,34 (mm) jeweils dreier Schnitte I, II, III in vertikaler bzw. mesiodistaler und Fig. 6d-f zeigt drei Schnitte IV, V, VI in horizontaler Richtung des Dentinkerns 3 in jeweils zwei gegenüberliegenden Konturen, bezeichnet als d-1,2, e-1,2 und f-1,2. Die graphischen Darstellungen der Fig. 6a-c bzw. d-f enthalten zusätzlich die den gezeigten Trendlinien zugrunde liegenden Funktionen, wobei den mesiodistalen Schnitten I, II, III jeweils eine Funktion zugrunde liegt. In den horizontalen Schnitten IV, V, VI in Fig. 6d-f werden gegenüberliegende Konturen durch die jeweils angegebene Funktion beschrieben, d.h. als 6 d-1, 2, 6 e-1, 2 und 6 f-1, 2. Die graphische Darstellung in Fig. 6 entspricht einer Spiegelung in Y-Richtung der in Fig. 5 gezeigten Funktionen mit veränderten numerischen Werten.

Dabei liegt Fig. 6 a die Funktion $y = -0{,}012\, x^4 - 0{,}0511\, x^3 - 0{,}2818\, x^2 + 0{,}1146\, x + 11{,}344$ zugrunde,

Fig. 6b liegt die Funktion $y = -0{,}0194\, x^4 - 0{,}0702\, x^3 - 0{,}3344\, x^2 + 0{,}1447\, x + 10{,}953$ zugrunde,

Fig. 6c liegt die Funktion $y = -0{,}0562\, x^4 - 0{,}178\, x^3 - 1{,}1711\, x^2 + 0{,}193\, x + 8{,}3451$ zugrunde,

Fig. 6d-1 liegt die Funktion $y = -0{,}0005\, x^4 - 5E\text{-}15\, x^3 - 0{,}1648\, x^2 - 8E\text{-}13x + 5{,}4008$ zugrunde,

Fig. 6d-2 liegt die Funktion $y = 0{,}0012\, x^4 + 1E\text{-}15\, x^3 + 0{,}095\, x^2 + 1E\text{-}12x - 4{,}0202$ zugrunde,

Fig. 6e-1 liegt die Funktion $= -0{,}0013\, x^4 - 4E\text{-}15\, x^3 - 0{,}1574\, x^2 + 1E\text{-}13x + 4{,}7053$ zugrunde,

Fig. 6e-2 liegt die Funktion $y = 0{,}0021\, x^4 - 2E\text{-}14\, x^3 + 0{,}0825\, x^2 - 5E\text{-}13x + - 3{,}5208$ zugrunde,

Fig. 6f-1 liegt die Funktion $y = -0{,}0055\, x^4 + 1E\text{-}14\, x^3 - 0{,}1032\, x^2 + 2E\text{-}12x + 3{,}1631$ zugrunde, und

Fig. 6f-2 liegt die Funktion $y = 0{,}007\, x^4 - 1E\text{-}14\, x^3 - 2E\text{-}12x - 2{,}4504$ zugrunde.

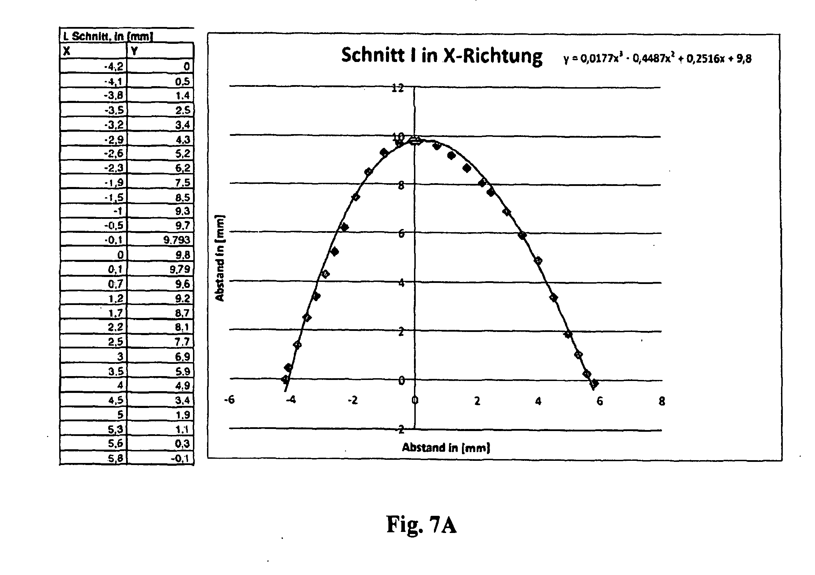

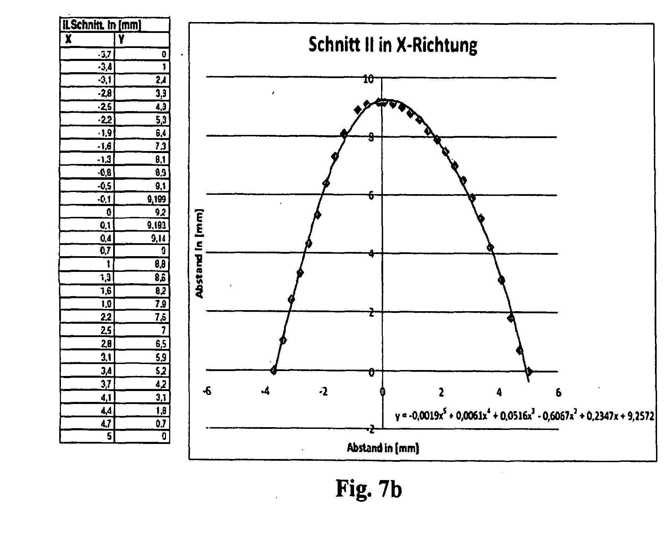

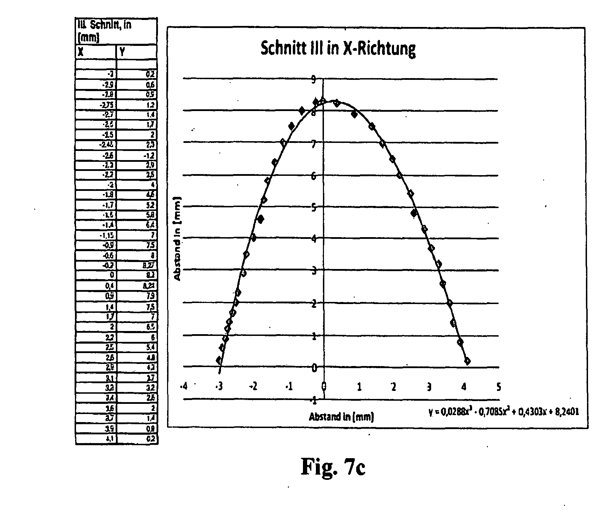

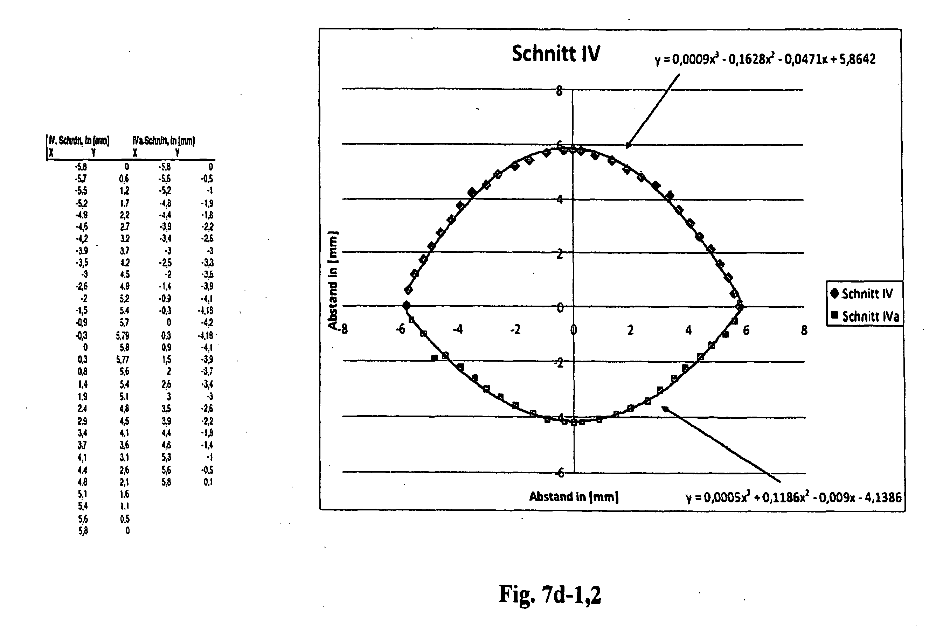

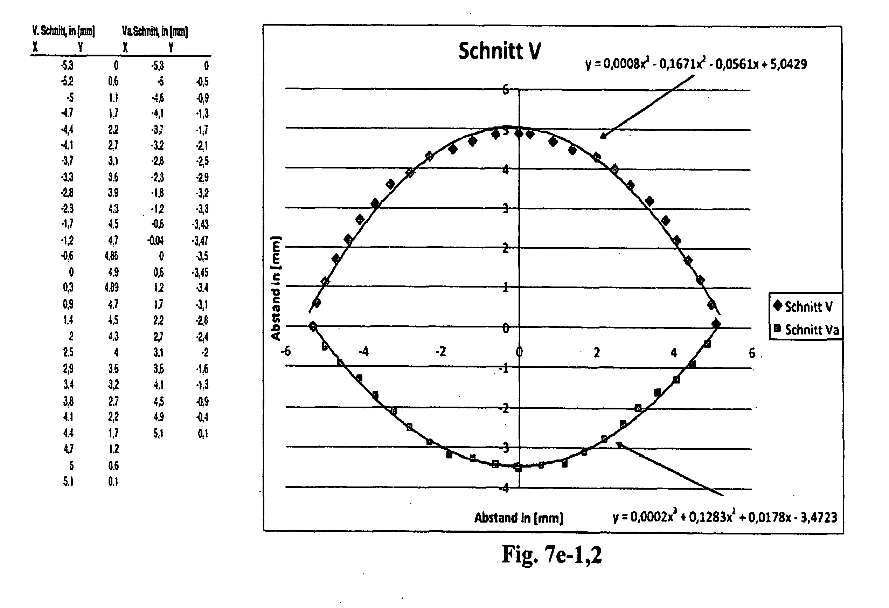

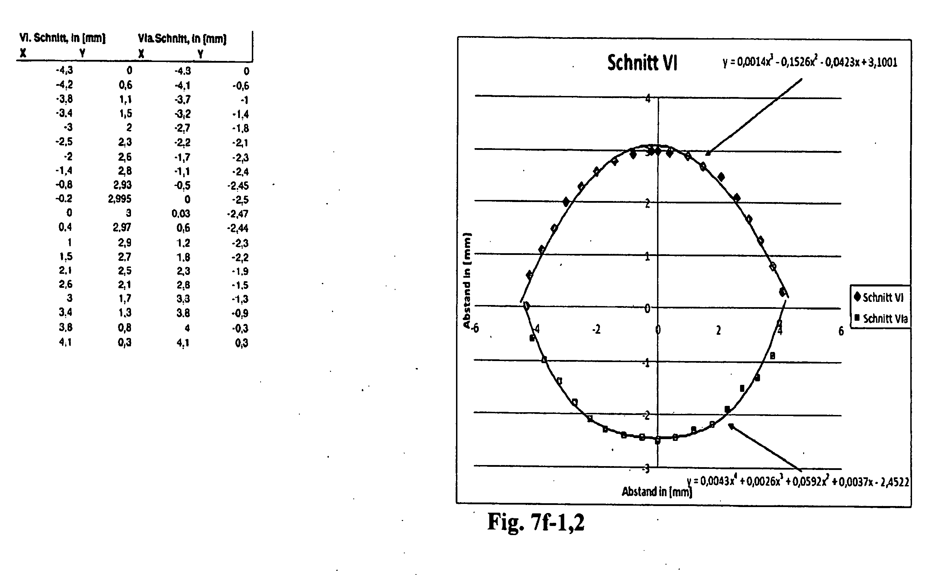

Fig. 7a-f zeigt die graphische Darstellung der besonders bevorzugten Schnittformel (III) mit f im Bereich von 0 bis 12, bevorzugt zwischen 0 und 9,8 (mm) jeweils dreier Schnitte I, II, III in vertikaler bzw. mesiodistaler und Fig. 7d-f zeigt drei Schnitte IV, V, VI in horizontaler Richtung des Dentinkerns 3 in jeweils zwei gegenüberliegenden Konturen, bezeichnet als d-1,2, e-1,2 und f-1,2. Die graphischen Darstellungen der Fig. 7a-c bzw. d-f enthalten zusätzlich die den gezeigten Trendlinien zugrunde liegenden Funktionen, wobei den mesiodistalen Schnitten I, II, III jeweils eine Funktion zugrunde liegt. In den horizontalen Schnitten IV, V, VI in Fig. 7d-f werden gegenüberliegende Konturen durch die jeweils angegebene Funktion beschrieben, d.h als 7 d-1, 2, 7 e-1, 2 und 7 f-1, 2. Die graphische Darstellung in Fig. 7 entspricht einer Spiegelung in Y-Richtung der in Fig. 5 bzw. 6 gezeigten Funktionen mit veränderten numerischen Werten.

Dabei liegt Fig. 7 a die Funktion $y = -0,0177\, x^3 - 0,4487\, x^2 + 0,2516\, x + 9,8$ zugrunde,

Fig. 7b liegt die Funktion $y = -0,0019\, x^5 + 0,061\, x^4 + 0,0516\, x^3 - 0,6067\, x^2 + 0,2347\, x + 9,2572$ zugrunde,

Fig. 7c liegt die Funktion $y = 0,0288\, x^3 - 0,7085\, x^2 + 0,4303\, x + 8,2401$ zugrunde,

Fig. 7d-1 liegt die Funktion $y = -0,0009\, x^3 - 0,1628\, x^2 - 0,0471x + 5,4862$ zugrunde,

Fig. 7d-2 liegt die Funktion $y = 0,0005\, x^3 + 0,1186\, x^2 - 0,009\, x - 4,3186$ zugrunde,

Fig. 7e-1 liegt die Funktion $y = 0,0008\, x^3 - 0,1671\, x^2 - 0,0561\, x + 5,0429$ zugrunde,

Fig. 7e-2 liegt die Funktion $y = 0,0002\, x^3 + 0,1283\, x^2 + 0,0178\, x - 3,4723$ zugrunde,

Fig. 7f-1 liegt die Funktion $y = -0,0014\, x^3 - 0,1526\, x^2 - 0,0423\, x + 3,1001$ zugrunde, und

Fig. 7f-2 liegt die Funktion $y = 0,0043\, x^4 + 0,0026\, x^3 + 0,0592\, x^2 + 0,0037\, x - 2,4522$ zugrunde.

In einer weiteren Ausführungsform ist der Zahnersatzformblock derart gestaltet, dass die Dentinzone 3 auf einer Dentinbasisfläche aufgesetzt ist und diese die gesamte Basisfläche des Zahnersatzformblockes 1 bildet.

Das Verfahren zu Herstellung eines Zahnersatzteils mit dem zuvor beschriebenen Zahnersatzformblock 1 beinhaltet als wesentlichen Schritt das Auswählen zumindest einer der beiden Dentinflächen, je nach Anforderung der realen Zahnsituation. Dadurch kann vorteilhaft ein Zahnersatzteil in wahlweise wenigstens zwei verschiedenen Größe und/oder Farben aus einem Zahnersatzformblock 1 hergestellt werden. Die Herstellung erfolgt durch Ausfräsen von einer ausgewählten Seite aus dem Zahnersatzformblock 1 mittels CAD/CAM-Verfahren. Der Farbeindruck des resultierenden Zahnersatzteils wird dann durch die Morphologie der wählbaren Dentinfläche und der Schichtdicke des verbleibenden Schmelzbereiches 5 bestimmt. Daraus ergibt sich, dass zumindest ein Teilbereich der Palatinalfläche des Zahnersatzteils, d.h. der gaumenseitigen Zahnfläche, einem Abschnitt der Dentinzone entspricht. Dieser Abschnitt ist jedoch nach außen hin nicht sichtbar.

**Patentansprüche**

1. Zahnersatzformblock (1) zur Herstellung eines einzelnen Zahnersatzteils des Front- und/oder Eckzahnbereichs welcher eine Dentinzone (3) aufweist, die unter Ausbildung einer Grenzflächen (7) In einen Schmelzbereich (5) eingebettet ist, wobei die Grenzfläche (7) der Dentinzone (3) zumindest eine erste Grenzfläche zur Ausbildung einer ersten Dentinfläche aufweist, welche zur Labialfläche eines ersten potentiellen Zahnersatzteils gerichtet ist, und eine zweite Grenzfläche zur Ausbildung einer zweiten Dentinfläche, welche zur Labialfläche eines zweiten potentiellen Zahnersatzteils gerichtet ist wobei die erste und zweite Dentinflächen gekrümmte Oberflächen sind und in approximaler Richtung einen gemeinsamen Schnittbereich aufweisen **dadurch gekennzeichnet, dass** die erste und zweite Dentinflächen gegenüberliegende, labiale Flächen der Dentinzone in jeweils konvexer Form mit verschiedenem, nicht-splegelsymmetrischem Konturverlauf ausbilden.

2. Zahnersatzformblock (1) nach Anspruch 1, wobei der Zahnersatzformblock aus zahnfarbenähnlichen Dentatwerkstoffen auf Basis von Keramikwerkstoffen und/oder Acrylaten hergestellt ist, wobei vorzugsweise die Dentinzone (3) und der Schmelzbereich (5) aus dem gleichen Material hergestellt sind.

3. Zahnersatzformblock (1) nach einem der Ansprüche 1 bis 2, **dadurch gekennzeichnet, dass** die Dentinzone (3) und der Schmelzbereich (5) eine unterschiedliche Pigmentierung aufweisen.

4. Zahnersatzformblock (1) nach einem der Ansprüche 1 bis 3, **dadurch gekennzeichnet, dass** die Dentinzone (3) vollumfänglich von dem Schmelzbereich (5) umschlossen ist.

5. Zahnersatzfonnblock (1) nach einem der Ansprüche 1 bis 4, **dadurch gekennzeichnet, dass** die Schnittfläche der Dentinzone, welche sowohl die erste Dentinfläche als auch die zweite Dentinfläche mittig und senkrecht zur Bodenfläche des Zahnersatzformblockes schneidet, die Form gemäß Formel (I) ausbildet:

$$(\text{I}) \qquad F(x) = ax^4 + bx^3 + cx^2 + dx + e\,;$$

wobei a im Bereich zwischen 0 und 0,05 liegt;

b im Bereich zwischen 0 und - 0,2 liegt;
c im Bereich zwischen 0 und 0,8 liegt;
d im Bereich zwischen 0 und 0,15 liegt;
e gleich 0 ist, und

vorzugsweise die Außenlinie gegenüber der F(x)-Achse unsymmetrisch verläuft.

6. Zahnersatzformblock (1) nach einem der Ansprüche 1 bis 4, **dadurch gekennzeichnet, dass** die Schnittfläche der Dentinzone, welche sowohl die erste Dentinfläche als auch die zweite Dentinfläche mittig und senkrecht zur Bodenfläche des Zahnersatzformblockes schneidet, die Form gemäß Formel (II) ausbildet:

$$\text{(II)} \quad F(x) = ax^4 + bx^3 + cx^2 + dx + e \ ;$$

wobei a im Bereich zwischen 0 und -0,05 liegt;

b im Bereich zwischen 0 und - 0,2 liegt;
c im Bereich zwischen 0 und 0,4 liegt;
d im Bereich zwischen 0 und 0,15 liegt;
e im Bereich zwischen 0 und 12, bevorzugt zwischen 0 und 11,34 liegt, und

vorzugsweise die Außenlinie gegenüber der F(x)-Achse unsymmetrisch verläuft.

7. Zahnersatzformblock (1) nach einem der Ansprüche 1 bis 4, **dadurch gekennzeichnet, dass** die Schnittfläche der Dentinzone, welche sowohl die erste Dentinfläche als auch die zweite Dentinfläche mittig und senkrecht zur Bodenfläche des Zahnersatzformblockes schneidet, die Form gemäß Formel (III) ausbildet:

$$\text{(III)} \quad F(x) = ax^5 + bx^4 + cx^3 + dx^2 + ex + f \ ;$$

wobei a im Bereich kleiner gleich 0 und -0,05 liegt; b im Bereich kleiner gleich 0 und - 0,2 liegt;

c im Bereich zwischen 0 und 0,2 liegt;
d im Bereich zwischen 0 und - 0,8 liegt;
e im Bereich zwischen 0 und 0,5 liegt;
f im Bereich zwischen 0 und 10, bevorzugt zwischen 8 und 9,8 liegt, und

vorzugsweise die Außenlinie gegenüber der F(x)-Achse unsymmetrisch verläuft.

8. Zahnersatzformblock (1) nach einem der Ansprüche 1 bis 6, **dadurch gekennzeichnet, dass** die Schnittfläche der Dentinzone, welche sowohl die erste Dentinfläche als auch die zweite Dentinfläche mittig und parallel zur Bodenfläche des Zahnersatzformblockes schneidet, die Form gemäß Formel (IV) ausbildet:

$$\text{(IV)} \quad G(x) = fx^4 + gx^2 + h \ ;$$

wobei

f im Bereich zwischen -0,001 bis 1 liegt;
g im Bereich zwischen - 0,2 bis 0,2 liegt;
h im Bereich zwischen -0,06 bis 6 liegt; und

vorzugsweise die Außenlinie gegenüber der G(x)-Achse symmetrisch verläuft.

9. Zahnersatzformblock (1) nach einem der Ansprüche 1 bis 8, **dadurch gekennzeichnet, dass** die Schnittfläche der Dentinzone, welche sowohl die erste Dentinfläche als auch die zweite Dentinfläche mittig und parallel zur Bodenfläche des Zahnersatzformblockes schneidet, die Form gemäß Formel (V) ausbildet:

$$(V) \quad G(x) = fx^4 + gx^3 + hx^2 + ix + j;$$

wobei f im Bereich zwischen -0,001 bis 0,05 liegt;

g im Bereich zwischen - 0,002 bis 0,005 liegt;
h im Bereich zwischen -0,2 bis 0,2 liegt;
i im Bereich zwischen -0,06 bis 0,06 liegt;
j im Bereich zwischen -4,5 und 5,5 liegt; und

vorzugsweise die Außenlinie gegenüber der G(x)-Achse symmetrisch verläuft.

10. Zahnersatzformblock (1) nach einem der Ansprüche 1 bis 9, **dadurch gekennzeichnet, dass** die Dentinzone (3) auf einer Dentinbasisfläche aufgesetzt ist, wobei die Dentinbasisfläche vorzugsweise die gesamte Basisfläche des Zahnersatzformblockes bildet.

11. Verwendung eines Zahnersatzformblocks nach einem der Ansprüche 1 bis 10 zur Herstellung eines Zahnersatzteils eines Front und /oder Eckzahnbereichs.

12. Verfahren zur Herstellung eines Zahnersatzteils, **gekennzeichnet durch** folgende Schritt:

a) Bereitstellen eines Zahnersatzformblocks (1) nach einem der Ansprüche 1 bis 10;
b) Auswählen zumindest einer Dentinfläche
c) Herstellen eines Im Front- und/oder Eckzahnbereich anordenbaren Zahnersatzteils in wahlweise wenigstens zwei verschiedenen Größen und/oder Farben nach einem CAD/CAM-Verfiahren mittels Materialabtragung aus dem Zahnersatzformblock (1).

13. Verfahren nach Anspruch 12, **dadurch gekennzeichnet, dass** das Material derart abgetragen wird, dass die Farbe des resultierenden Zahnersatzteiles durch die wählbare Dentinfläche und/oder die Schichtdicke des Schmelzbereiches (5) bestimmt wird.

14. Verfahren nach Anspruch 12 oder 13, **dadurch gekennzeichnet, dass** die Farbe des resultierenden Zahnersatzieils anhand der Schichtdicke des Schmelzbereiches (5) mittels CAD-Software vorherbestimmbar ist.

**Claims**

1. A dental prosthesis moulding block (1) for the production of an individual dental prosthesis part of the anterior tooth and/or canine region which has a dentin zone (3) which is embedded into an enamel region (5), a boundary surface (7) thus being formed, the boundary surface (7) of the dentin zone (3) having at least a first boundary surface for the formation of a first dentin surface which is directed toward the labial surface of a first potential dental prosthesis part, and a second boundary surface for the formation of a second dentin surface which is directed toward the labial surface of a second potential dental prosthesis part, the first and the second dentin surface being curved surfaces and having a common cutting region in the approximal direction, **characterised in that** the first and the second dentin surface form opposing labial surfaces of the dentin zone in a respectively convex shape with a different, non-mirror symmetrical contour shape.

2. The dental prosthesis moulding block (1) according to Claim 1, the dental prosthesis moulding block being produced from dental materials based on ceramic materials and/or acrylates coloured similarly to teeth, the dentin zone (3) and the enamel region (5) preferably being produced from the same material.

3. The dental prosthesis moulding block (1) according to either of Claims 1 to 2, **characterised in that** the dentin zone (3) and the enamel region (5) have different pigmentations.

4.  The dental prosthesis moulding block (1) according to any of Claims 1 to 3, **characterised in that** the dentin zone (3) is entirely surrounded by the enamel region (5).

5.  The dental prosthesis moulding block (1) according to any of Claims 1 to 4, **characterised in that** the cutting surface of the dentin zone, which cuts both the first dentin surface and the second dentin surface centrally and perpendicularly to the bottom surface of the dental prosthesis moulding block, forms the shape according to formula (I):

$$(I) \quad F(x) = ax^4 + bx^3 + cx^2 + dx + e;$$

a coming in the range between 0 and 0.05;
b coming in the range between 0 and -0.2;
c coming in the range between 0 and 0.8;
d coming in the range between 0 and 0.15;
e being equal to 0, and

the outer line preferably running asymmetrically with respect to the F(x) axis.

6.  The dental prosthesis moulding block (1) according to any of Claims 1 to 4, **characterised in that** the cutting surface of the dentin zone, which cuts both the first dentin surface and the second dentin surface centrally and perpendicularly to the bottom surface of the dental prosthesis moulding block, forms the shape according to formula (II):

$$(II) \quad F(x) = ax^4 + bx^3 + cx^2 + dx + e;$$

a coming in the range between 0 and -0.05;
b coming in the range between 0 and -0.2;
c coming in the range between 0 and 0.4;
d coming in the range between 0 and 0.15;
e coming in the range between 0 and 12, preferably between 0 and 11.34, and

the outer line preferably running asymmetrically with respect to the F(x) axis.

7.  The dental prosthesis moulding block (1) according to any of Claims 1 to 4, **characterised in that** the cutting surface of the dentin zone, which cuts both the first dentin surface and the second dentin surface centrally and perpendicularly to the bottom surface of the dental prosthesis moulding block, forms the shape according to formula (III):

$$(III) \quad F(x) = ax^5 + bx^4 + cx^3 + dx^2 + ex + f;$$

a coming in the range of smaller than equal to 0 and - 0.05;
b coming in the range of smaller than equal to 0 and -0.2;
c coming in the range between 0 and 0.2;
d coming in the range between 0 and -0.8;
e coming in the range between 0 and 0.5,
f coming in the range between 0 and 10, preferably between 8 and 9.8, and

the outer line preferably running asymmetrically with respect to the F(x) axis.

8.  The dental prosthesis moulding block (1) according to any of Claims 1 to 6, **characterised in that** the cutting surface of the dentin zone, which cuts both the first dentin surface and the second dentin surface centrally and parallel to the bottom surface of the dental prosthesis moulding block, forms the shape according to formula (IV):

$$(IV) \quad G(x) = fx^4 + gx^2 + h;$$

    f coming in the range between -0.001 and 1;
    g coming in the range between -0.2 and 0.2;
    h coming in the range between -0.06 and 6; and

the outer line preferably running symmetrically with respect to the G(x) axis.

9.    The dental prosthesis moulding block (1) according to any of Claims 1 to 8, **characterised in that** the cutting surface of the dentin zone, which cuts both the first dentin surface and the second dentin surface centrally and parallel to the bottom surface of the dental prosthesis moulding block, forms the shape according to formula (V):

$$(V) \quad G(x) = fx^4 + gx^3 + hx^2 + ix + j;$$

    f coming in the range between -0.001 and 0.05;
    g coming in the range between -0.002 and 0.005;
    h coming in the range between -0.2 and 0.2; and
    i coming in the range between -0.06 and 0.06
    j coming in the range between -4.5 and 5.5; and

the outer line preferably running symmetrically with respect to the G(x) axis.

10.   The dental prosthesis moulding block (1) according to any of Claims 1 to 9, **characterised in that** the dentin zone is placed on a dentin base surface, the dentin base surface preferably forming the entire base surface of the dental prosthesis moulding block.

11.   The use of a dental prosthesis moulding block according to any of Claims 1 to 10 for the production of a dental prosthesis part of an anterior tooth and/or canine region.

12.   A method for producing a dental prosthesis part, **characterised by** the following steps:

    a) providing a dental prosthesis moulding block (1) according to any of Claims 1 to 10;
    b) selecting at least one dentin surface;
    c) producing a dental prosthesis part that can be disposed in the anterior tooth and/or canine region in optionally at least two different sizes and/or colours using a CAD/CAM method by means of removing material from the dental prosthesis moulding block (1).

13.   The method according to Claim 12, **characterised in that** the material is removed such that the colour of the resulting dental prosthesis part is determined by the selectable dentin surface and/or the layer thickness of the enamel region (5).

14.   The method according to Claim 12 or 13, **characterised in that** the colour of the resulting dental prosthesis part can be determined in advance using the layer thickness of the enamel region (5) by means of CAD software.

**Revendications**

1.    Bloc-moule pour prothèse dentaire (1) pour la fabrication d'une prothèse dentaire individuelle appropriée à la zone des dents antérieures et/ou canines, lequel présente une zone de dentine (3) qui est intégrée dans une zone d'émail (5) en formant une surface limite (7), ladite surface limite (7) de la zone de dentine (3) présentant au moins une première surface limite permettant de créer une première surface de dentine tournée vers la face vestibulaire d'une première prothèse dentaire potentielle, et une seconde surface limite permettant de créer une seconde surface de dentine tournée vers la face vestibulaire d'une deuxième prothèse dentaire potentielle ; la première et la seconde surface de dentine étant des surfaces arquées présentant une zone de coupe commune dans la direction proximale, **caractérisé en ce que** la première et la seconde surface de dentine constituent des surfaces vestibulaires de la zone de dentine opposées sous une forme respectivement convexe présentant un contour non symétrique distinct.

2.  Bloc-moule pour prothèse dentaire (1) selon la revendication 1, dans lequel le bloc-moule pour prothèse dentaire est fabriqué dans des matériaux dentaires proches de la couleur des dents, à base de matières céramiques et/ou d'acrylates, la zone de dentine (3) et la zone d'émail (5) étant de préférence fabriquées dans le même matériau.

3.  Bloc-moule pour prothèse dentaire (1) selon l'une quelconque des revendications 1 et 2, **caractérisé en ce que** la zone de dentine (3) et la zone d'émail (5) présentent une pigmentation différente.

4.  Bloc-moule pour prothèse dentaire (1) selon l'une quelconque des revendications 1 à 3, **caractérisé en ce que** la zone de dentine (3) est totalement entourée par la zone d'émail (5).

5.  Bloc-moule pour prothèse dentaire (1) selon l'une quelconque des revendications 1 à 4, **caractérisé en ce que** la surface de coupe de la zone de dentine, qui coupe aussi bien la première surface de dentine que la seconde surface de dentine de manière centrée et perpendiculaire à la surface de fond du bloc-moule pour prothèse dentaire, constitue la forme selon la formule (I) :

$$\text{(I)} \quad F(x) = ax^4 + bx^3 + cx^2 + dx + e \text{ ;}$$

dans laquelle

> a se situe dans l'intervalle de 0 à 0,05 ;
> b se situe dans l'intervalle de 0 à -0,2 ;
> c se situe dans l'intervalle de 0 à 0,8 ;
> d se situe dans l'intervalle de 0 à 0,15 ;
> e vaut 0, et

la ligne extérieure est de préférence asymétrique par rapport à l'axe F(x).

6.  Bloc-moule pour prothèse dentaire (1) selon l'une quelconque des revendications 1 à 4, **caractérisé en ce que** la surface de coupe de la zone de dentine, qui coupe aussi bien la première surface de dentine que la seconde surface de dentine de manière centrée et perpendiculaire à la surface de fond du bloc-moule pour prothèse dentaire, constitue la forme selon la formule (II) :

$$\text{(II)} \quad F(x) = ax^4 + bx^3 + cx^2 + dx + e \text{ ;}$$

dans laquelle

> a se situe dans l'intervalle de 0 à -0,05 ;
> b se situe dans l'intervalle de 0 à -0,2 ;
> c se situe dans l'intervalle de 0 à 0,4 ;
> d se situe dans l'intervalle de 0 à 0,15 ;
> e se situe dans l'intervalle de 0 à 12, en étant de préférence entre 0 et 11,34, et

la ligne extérieure est de préférence asymétrique par rapport à l'axe F(x).

7.  Bloc-moule pour prothèse dentaire (1) selon l'une quelconque des revendications 1 à 4, **caractérisé en ce que** la surface de coupe de la zone de dentine, qui coupe aussi bien la première surface de dentine que la seconde surface de dentine de manière centrée et perpendiculaire à la surface de fond du bloc-moule pour prothèse dentaire, constitue la forme selon la formule (III) :

$$\text{(III)} \quad F(x) = ax^5 + bx^4 + cx^3 + dx^2 + ex + f \, ;$$

dans laquelle

a se situe dans l'intervalle inférieur ou égal à 0 et -0,05 ;
b se situe dans l'intervalle inférieur ou égal à 0 et -0,2 ;
c se situe dans l'intervalle de 0 à 0,2 ;
d se situe dans l'intervalle de 0 à -0,8 ;
e se situe dans l'intervalle de 0 à 0,5 ;
f se situe dans l'intervalle de 0 à 10, en étant de préférence entre 8 et 9,8, et

la ligne extérieure est de préférence asymétrique par rapport à l'axe F(x).

**8.** Bloc-moule pour prothèse dentaire (1) selon l'une quelconque des revendications 1 à 6, **caractérisé en ce que** la surface de coupe de la zone de dentine, qui coupe aussi bien la première surface de dentine que la seconde surface de dentine de manière centrée et parallèle à la surface de fond du bloc-moule pour prothèse dentaire, constitue la forme selon la formule (IV) :

$$\text{(IV)} \quad G(x) = fx^4 + gx^2 + h \, ;$$

dans laquelle

f se situe dans l'intervalle de -0,001 à 1 ;
g se situe dans l'intervalle de -0,2 à 0,2 ;
h se situe dans l'intervalle de -0,06 à 6 ; et

la ligne extérieure est de préférence symétrique par rapport à l'axe G(x).

**9.** Bloc-moule pour prothèse dentaire (1) selon l'une quelconque des revendications 1 à 8, **caractérisé en ce que** la surface de coupe de la zone de dentine, qui coupe aussi bien la première surface de dentine que la seconde surface de dentine de manière centrée et parallèle à la surface de fond du bloc-moule pour prothèse dentaire, constitue la forme selon la formule (V) :

$$\text{(V)} \quad G(x) = fx^4 + gx^3 + hx^2 + ix + j \, ;$$

dans laquelle

f se situe dans l'intervalle de -0,001 à 0,05 ;
g se situe dans l'intervalle de -0,002 à 0,005 ;
h se situe dans l'intervalle de -0,2 à 0,2 ;
i se situe dans l'intervalle de -0,06 à 0,06 ;
j se situe dans l'intervalle de -4,5 à 5,5 ; et

la ligne extérieure est de préférence symétrique par rapport à l'axe G(x).

**10.** Bloc-moule pour prothèse dentaire (1) selon l'une quelconque des revendications 1 à 9, **caractérisé en ce que** la zone de dentine (3) est posée sur une surface de base de dentine, ladite surface de base de dentine formant de préférence l'intégralité de la surface de base du bloc-moule pour prothèse dentaire.

**11.** Utilisation d'un bloc-moule pour prothèse dentaires selon l'une quelconque des revendications 1 à 10 pour la fabrication d'une prothèse dentaire appropriée à la zone des dents antérieures ou canines.

**12.** Procédé pour la fabrication d'une prothèse dentaire, **caractérisé par** les étapes suivantes :

a) mise à disposition d'un bloc-moule pour prothèse dentaire (1) selon l'une quelconque des revendications 1 à 10 ;
b) choix d'au moins une surface de dentine ;
c) fabrication d'une prothèse dentaire susceptible d'être mise en place dans la zone des dents antérieures ou canines dans au moins deux tailles et/ou couleurs différentes au choix selon un procédé CAD/CAM par enlèvement de matière du bloc-moule pour prothèse dentaire (1).

**13.** Procédé selon la revendication 12, **caractérisé en ce que** la matière est enlevée de telle manière que la couleur de la prothèse dentaire produite est déterminée par la surface de dentine choisissable et/ou l'épaisseur de couche de la zone d'émail (5).

**14.** Procédé selon la revendication 12 ou 13, **caractérisé en ce que** la couleur de la prothèse dentaire produite peut être prédéterminée par le biais de l'épaisseur de couche de la zone d'émail (5) au moyen d'un logiciel de CAD.

Fig. 1

Fig. 2

Fig. 4

Fig. 3

Fig. 5 a

Fig. 5 b

Fig. 5 c

Fig. 5 d-1

Fig. 5 d-2

Fig. 5 e-1

## Schnitt Nr.5

$y = -0,001x^4 - 0,123x^2 + 5,124$

Kontur 1

Poly. (Kontur 1)

Abstand in [mm]

Abstand in [mm]

Fig. 5 e-2

## Schnitt Nr.6

$y = 0,004x^4 + 0,054x^2 - 3,003$

Kontur 2

Poly. (Kontur 2)

Abstand in [mm]

Abstand in [mm]

Fig. 5 f-1

Fig. 5 f-2

**Schnitt I**

| X | Y |
|---|---|
| -5,44 | 0 |
| -5,22 | 1,55 |
| -4,83 | 3,55 |
| -4,33 | 5,55 |
| -3,59 | 7,55 |
| -2,49 | 9,55 |
| -1,7 | 10,55 |
| 0 | 11,55 |
| 1,49 | 10,55 |
| 2,04 | 9,55 |
| 2,8 | 7,55 |
| 3,31 | 5,55 |
| 3,66 | 3,55 |
| 3,93 | 1,55 |
| 4,09 | 0 |

**Schnitt I**

$$y = -0,012x^4 - 0,0511x^3 - 0,2818x^2 + 0,1146x + 11,344$$

Abstand in [mm]

Abstand in [mm]

**Fig. 6 a**

**Schnitt II**

$$y = -0,0194x^4 - 0,0702x^3 - 0,3344x^2 + 0,1447x + 10,953$$

Abstand in [mm]

**Fig. 6 b**

Schnitt II

| X | Y |
|---|---|
| -4,73 | 0 |
| -4,6 | 1,55 |
| -4,32 | 3,56 |
| -3,73 | 5,55 |
| -2,98 | 7,55 |
| -1,99 | 9,55 |
| -1,17 | 10,56 |
| 0 | 11,13 |
| 1,11 | 10,56 |
| 1,7 | 9,55 |
| 2,38 | 7,55 |
| 2,9 | 5,55 |
| 3,32 | 3,56 |
| 3,51 | 1,55 |
| 3,59 | 0 |

22

Schnitt III

| X | Y |
|---|---|
| -2,63 | 0 |
| -2,49 | 1,55 |
| -2,06 | 3,55 |
| -1,52 | 5,55 |
| -1,19 | 6,55 |
| -0,79 | 7,55 |
| -0,5 | 8,05 |
| 0 | 8,39 |
| 0,59 | 8,05 |
| 0,86 | 7,55 |
| 1,15 | 6,55 |
| 1,38 | 5,55 |
| 1,77 | 3,55 |
| 2,06 | 1,55 |
| 2,16 | 0 |

**Schnitt III**  $y = -0,0562x^4 - 0,178x^3 - 1,1711x^2 + 0,193x + 8,3451$

Abstand in [mm]

Abstand in [mm]

EP 2 770 946 B1

**Fig. 6 c**

**Schnitt IV**

| X | Y |
|---|---|
| -5,46 | 0 |
| -5 | 1,11 |
| -4 | 2,63 |
| -3 | 3,83 |
| -2 | 4,71 |
| -1 | 5,26 |
| 0 | 5,44 |
| 1 | 5,26 |
| 2 | 4,71 |
| 3 | 3,83 |
| 4 | 2,63 |
| 5 | 1,11 |
| 5,46 | 0 |

**Schnitt IVa**

| X | Y |
|---|---|
| -5,46 | 0 |
| -5 | -1,1 |
| -4 | -2,16 |
| -3 | -2,99 |
| -2 | -3,59 |
| -1 | -3,96 |
| 0 | -4,08 |
| 1 | -3,96 |
| 2 | -3,59 |
| 3 | -2,99 |
| 4 | -2,16 |
| 5 | -1,1 |
| 5,46 | 0 |

**Schnitt IV**

$y = -0,0005x^4 - 5E\text{-}15x^3 - 0,1648x^2 - 8E\text{-}13x + 5,4008$

$y = 0,0012x^4 + 1E\text{-}15x^3 + 0,095x^2 + 1E\text{-}12x - 4,0202$

Abstand in [mm]

Abstand in [mm]

1

2

**Fig. 6 d - 1,2**

**Schnitt V**

| X | Y |
|---|---|
| -4,98 | 0 |
| -4 | 1,85 |
| -3 | 3,15 |
| -2 | 4,11 |
| -1 | 4,56 |
| 0 | 4,63 |
| 1 | 4,56 |
| 2 | 4,11 |
| 3 | 3,15 |
| 4 | 1,85 |
| 4,98 | 0 |

**Schnitt Va**

| X | Y |
|---|---|
| -4,98 | 0 |
| -4,75 | -0,81 |
| -4,5 | -1,1 |
| -4 | -1,61 |
| -3 | -2,52 |
| -2 | -3,17 |
| -1 | -3,47 |
| 0 | -3,52 |
| 1 | -3,47 |
| 2 | -3,17 |
| 3 | -2,52 |
| 4 | -1,61 |
| 4,5 | -1,1 |
| 4,75 | -0,81 |
| 4,98 | 0 |

**Schnitt V**

$y = -0{,}0013x^4 - 4E\text{-}15x^3 - 0{,}1574x^2 + 1E\text{-}13x + 4{,}7053$

$y = 0{,}0021x^4 - 2E\text{-}14x^3 + 0{,}0825x^2 - 5E\text{-}13x - 3{,}5208$

**Fig. 6 e - 1,2**

EP 2 770 946 B1

**Schnitt VI**

| X | Y |
|---|---|
| -4 | 0 |
| -3,75 | 0,76 |
| -3,5 | 1,11 |
| -3 | 1,73 |
| -2 | 2,62 |
| -1 | 3,08 |
| 0 | 3,18 |
| 1 | 3,08 |
| 2 | 2,62 |
| 3 | 1,73 |
| 3,5 | 1,11 |
| 3,75 | 0,76 |
| 4 | 0 |

**Schnitt VIa**

| X | Y |
|---|---|
| -4 | 0 |
| -3,75 | -0,82 |
| -3,5 | -1,09 |
| -3 | -1,52 |
| -2 | -2,13 |
| -1 | -2,44 |
| 0 | -2,51 |
| 1 | -2,44 |
| 2 | -2,13 |
| 3 | -1,52 |
| 3,5 | -1,09 |
| 3,75 | -0,82 |
| 4 | 0 |

**Schnitt VI**

$y = -0,0055x^4 + 1E\text{-}14x^3 - 0,1032x^2 + 2E\text{-}12x + 3,1631$

$y = 0,007x^4 - 1E\text{-}14x^3 + 0,0318x^2 - 2E\text{-}12x - 2,4504$

Abstand in [mm]

**Fig. 6 f - 1,2**

Fig. 7A

Fig. 7b

## Schnitt III in X-Richtung

Abstand in [mm]

Abstand in [mm]

$y = 0{,}0288x^3 - 0{,}7085x^2 + 0{,}4303x + 8{,}2401$

**Fig. 7c**

Fig. 7d-1,2

**Schnitt V**

$y = 0{,}0008x^3 - 0{,}1671x^2 - 0{,}0561x + 5{,}0429$

$y = 0{,}0002x^3 + 0{,}1283x^2 + 0{,}0178x - 3{,}4723$

Legend: ◆ Schnitt V  ▣ Schnitt Va

Abstand in [mm]

**Fig. 7e-1,2**

| V. Schnitt in [mm] | | Va Schnitt in [mm] | | |
|---|---|---|---|---|
| X | Y | X | Y | |
| 0 | -5,3 | 0 | -5,3 | 0 |
| 0,6 | -5,2 | 0,6 | -5 | -0,5 |
| 1,1 | -5 | 1,1 | -4,6 | -0,9 |
| 1,7 | -4,7 | 1,7 | -4,1 | -1,3 |
| 2,2 | -4,4 | 2,2 | -3,7 | -1,7 |
| 2,7 | -4,1 | 2,7 | -3,2 | -2,1 |
| 3,1 | -3,7 | 3,1 | -2,8 | -2,5 |
| 3,6 | -3,3 | 3,6 | -2,3 | -2,9 |
| 3,9 | -2,8 | 3,9 | -1,8 | -3,2 |
| 4,3 | -2,3 | 4,3 | -1,2 | -3,3 |
| 4,5 | -1,7 | 4,5 | -0,6 | -3,43 |
| 4,7 | -1,2 | 4,7 | -0,04 | -3,47 |
| 4,86 | -0,6 | 4,86 | 0 | -3,5 |
| 4,9 | 0 | 4,9 | 0,6 | -3,45 |
| 4,89 | 0,3 | 4,89 | 1,2 | -3,4 |
| 4,7 | 0,9 | 4,7 | 1,7 | -3,1 |
| 4,5 | 1,4 | 4,5 | 2,2 | -2,8 |
| 4,3 | 2 | 4,3 | 2,7 | -2,4 |
| 4 | 2,5 | 4 | 3,1 | -2 |
| 3,6 | 2,9 | 3,6 | 3,6 | -1,6 |
| 3,2 | 3,4 | 3,2 | 4,1 | -1,3 |
| 2,7 | 3,8 | 2,7 | 4,5 | -0,9 |
| 2,2 | 4,1 | 2,2 | 4,9 | -0,4 |
| 1,7 | 4,4 | 1,7 | 5,1 | 0,1 |
| 1,2 | 4,7 | 1,2 | | |
| 0,6 | 5 | 0,6 | | |
| 0,1 | 5,1 | 0,1 | | |

Schnitt VI

$y = 0,0014x^3 - 0,1526x^2 - 0,043x + 3,001$

$y = 0,0043x^4 + 0,0026x^3 + 0,0592x^2 + 0,0037x - 2,4522$

Abstand in [mm]

Legend: Schnitt VI ◆ · Schnitt VIa ■

**Fig. 7f-1,2**

| VI. Schnitt, in [mm] | | Via Schnitt, in [mm] | |
|---|---|---|---|
| x | y | x | y |
| -4,3 | 0 | -4,3 | 0 |
| -4,2 | 0,6 | -4,1 | -0,6 |
| -3,8 | 1,1 | -3,7 | -1 |
| -3,4 | 1,5 | -3,2 | -1,4 |
| -3 | 2 | -2,7 | -1,8 |
| -2,5 | 2,3 | -2,2 | -2,1 |
| -2 | 2,6 | -1,7 | -2,3 |
| -1,4 | 2,8 | -1,1 | -2,4 |
| -0,8 | 2,93 | -0,5 | -2,45 |
| -0,2 | 2,995 | 0 | -2,5 |
| 0 | 3 | 0,03 | -2,47 |
| 0,4 | 2,97 | 0,6 | -2,44 |
| 1 | 2,9 | 1,2 | -2,3 |
| 1,5 | 2,7 | 1,8 | -2,2 |
| 2,1 | 2,5 | 2,3 | -1,9 |
| 2,6 | 2,1 | 2,8 | -1,5 |
| 3 | 1,7 | 3,3 | -1,3 |
| 3,4 | 1,3 | 3,8 | -0,9 |
| 3,8 | 0,8 | 4 | -0,3 |
| 4,1 | 0,3 | 4,1 | 0,3 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4970032 A
- DE 102009019447 A
- US 5151044 A
- WO 2008083358 A
- WO 20100010082 A